# FASCICULE DE BREVET EUROPEEN

(11) **EP 2 672 605 B1**
(45) Date de publication et mention de la délivrance du brevet: **01.06.2016**
(21) Numéro de dépôt: 13171093.1
(22) Date de dépôt: 07.06.2013
(51) Int. Cl.: H02J 7/00, B60L 11/18

(54) **Dispositif de charge pour batterie embarquée dans un véhicule électrique ou dans un véhicule électrique hybride rechargeable**
Ladevorrichtung für eine Batterie in einem Elektrofahrzeug oder Elektro-Hybridfahrzeug
Charging device for on board battery in an electric vehicle or in a plug-in hybrid electric vehicle

(30) Priorité: 07.06.2012 FR 1255320
(43) Date de publication de la demande: 11.12.2013
(73) Titulaire: Electricité de France, 75008 Paris (FR)
(72) Inventeur: Bargues, Jean-Luc, 78340 Les Clayes sous Bois (FR)
(74) Mandataire: Regimbeau

(56) Documents cités:
- FR-A1- 2 766 950
- FR-A1- 2 963 855
- US-A1- 2010 013 433
- US-A1- 2010 134 067
- US-A1- 2010 207 588
- US-B1- 6 225 776

## Description

### DOMAINE DE L'INVENTION

L'invention concerne un dispositif pour la livraison d'énergie électrique nécessaire à la recharge d'une batterie de Véhicule Electrique (VE) ou de Véhicule Electrique Hybride Rechargeable (VEHR).

### ETAT DE LA TECHNIQUE

Les Véhicules Electriques (VE) actuels présentent généralement une autonomie d'environ 160 km. L'autonomie des Véhicules Electriques Hybrides Rechargeables (VEHR) est de l'ordre de 20 km en fonctionnement électrique pur. Le développement de ces véhicules nécessite l'installation d'infrastructures fixes de recharge publiques ou privées spécifiques afin de permettre la recharge en énergie électrique des batteries équipant ces véhicules. Ces infrastructures fixes incluent notamment des bornes de charge installées sur la voirie ou des coffrets de charge fixés sur des murs, répartis en divers lieux géographiques et auxquelles des véhicules peuvent être raccordés au moyen d'un câble souple de charge pour être alimentés en énergie électrique.

Ces bornes ou coffrets comprennent généralement un boîtier alimenté par un réseau d'alimentation électrique public ou privé et un socle de prise électrique contenu dans le boîtier pour le raccordement au câble de charge du véhicule. Le socle de prise électrique permet de délivrer un courant alternatif sous une tension nominale de 230 Volts monophasé à une fréquence de 50 Hz. Le boîtier comprend généralement une porte permettant de sécuriser l'accès au socle de prise.

Ces bornes ou coffrets de charge sont en libre-service, et peuvent par conséquent subir des détériorations du fait d'une mauvaise utilisation. En particulier, un mauvais raccordement de la fiche du câble de charge au socle de prise de la borne ou du coffret peut entrainer une dégradation du dispositif et un danger pour les utilisateurs.

Par ailleurs, les bornes ou coffrets de charge et les véhicules peuvent subir des actes de vandalisme. Par exemple, une personne malveillante peut tenter de débrancher le câble de charge d'un véhicule équipé d'une prise mobile et d'un socle de connecteur alors que le véhicule est en cours de charge.

On connait également les documents US2010/013433, FR2963855, US2010/134067 et US2010/207588 qui décrivent des systèmes pour la recharge d'une batterie d'un véhicule électrique.

Toutefois, aucune des solutions proposées dans ces documents n'est satisfaisante.

### RESUME DE L'INVENTION

Un but de l'invention est de proposer un dispositif de charge qui permette de limiter les risques de détérioration du dispositif.

Ce problème est résolu dans le cadre de la présente invention grâce à un dispositif de charge pour la livraison d'énergie électrique nécessaire à la recharge d'une batterie embarquée dans un véhicule électrique ou un véhicule électrique hybride rechargeable comprenant :
- un socle de prise adapté pour recevoir une fiche d'un câble de charge pour raccorder un chargeur associé à la batterie à un réseau de distribution électrique,
- un boîtier dans lequel est placé le socle de prise, le boîtier comprenant une porte de sécurité mobile entre une position ouverte autorisant un accès au socle de prise et une position fermée empêchant l'accès au socle de prise, et
- un moyen de commande programmé pour :
   déterminer si une condition de branchement de la fiche dans le socle est satisfaite, et dans le cas où la condition est satisfaite, déclencher une mise sous tension du socle de prise et une fermeture automatique de la porte de sécurité, et pour
   déterminer si un courant de charge supérieur à une valeur seuil prédéterminée est délivré à travers le socle de prise et, tant que le courant de charge est supérieur à la valeur seuil prédéterminée, déterminer si la condition de branchement de la fiche dans le socle est satisfaite, et dans le cas où la condition n'est pas satisfaite, interrompre la mise sous tension du socle de prise,
   le moyen de commande (35) étant programmé pour déclencher une temporisation (C) d'une durée prédéterminée et pour interrompre la mise sous tension du socle de prise (8) si, une fois la durée prédéterminée écoulée, le courant de charge est inférieur à la valeur seuil prédéterminée.

La détermination de la condition de branchement de la fiche dans le socle permet de s'assurer que la connexion fiche-socle est correctement réalisée avant la délivrance du courant de charge et la fermeture de la porte de sécurité. Cela évite une détérioration du matériel dû à une mauvaise connexion.

De plus, tant que la batterie est en cours de charge, la condition de branchement est régulièrement déterminée, de sorte qu'en cas de tentative d'arrachage du câble du coffret ou de la borne en cours de charge, la charge est automatiquement interrompue.

Le dispositif de charge peut en outre présenter les caractéristiques suivantes :
- le moyen de commande est programmé pour déterminer si un courant de charge supérieur à une valeur seuil prédéterminée est délivré à travers le socle de prise et pour interrompre la mise sous tension du socle de prise si le courant de charge est inférieur à la valeur seuil,
- le dispositif comprend en outre un capteur de position adapté pour détecter une position de la fiche par rapport au socle, et le moyen de commande est adapté pour déterminer si la condition de branchement de la fiche dans le socle est satisfaite en fonction de la position détectée par le capteur,
- le capteur de position comprend un pion mobile par rapport au socle de prise et agencé pour venir en contact avec la fiche de manière à être déplacé par la fiche lorsque la fiche est insérée dans le socle de prise,
- le dispositif comprend un moyen de lecture adapté pour lire des données d'un badge et transmettre les données lues vers le moyen de commande, le moyen de commande étant apte à déclencher l'ouverture et/ou la fermeture de la porte de sécurité en fonction des données lues,
- le moyen de commande est apte à comparer les données lues avec des données contenues dans une base de données locale située dans le moyen de commande ou une base de données distante d'un système de gestion centralisé,
- le moyen de commande est apte à déverrouiller la porte de sécurité pour permettre l'ouverture de la porte en fonction des données lues,
- le dispositif comprend en outre un moyen de maintien de la porte en position ouverte, le moyen de commande étant apte à désactiver le moyen de maintien afin d'autoriser la fermeture de la porte,
- le dispositif comprend en outre un moyen de rappel adapté pour solliciter la porte de sécurité vers la position fermée de manière à provoquer une fermeture automatique de la porte de sécurité,
- le dispositif comprend en outre un dispositif d'affichage adapté pour être commandé par le moyen de commande, le moyen de commande commandant le dispositif d'affichage pour que le dispositif d'affichage affiche des messages à l'attention d'un utilisateur du dispositif afin de guider l'utilisateur dans des opérations de raccordement du câble de charge,
- le dispositif comprend un compteur d'énergie adapté pour délivrer des impulsions de comptage d'énergie dépendant d'une quantité d'énergie électrique délivrée par le réseau de distribution électrique à la batterie, et le moyen de commande est programmé pour traiter les impulsions délivrées par le compteur d'énergie et en déduire la quantité d'énergie électrique délivrée par le réseau de distribution électrique à la batterie.

L'invention concerne également un système pour la livraison d'énergie électrique nécessaire à la recharge de batteries embarquées dans des véhicules électriques ou des véhicules électriques hybrides rechargeables, comprenant une pluralité de dispositifs de charge tels que définis précédemment, les dispositifs de charge étant reliés entre eux par un bus de communication pour échanger des données entre les dispositifs de charge et/ou envoyer des informations vers un système de gestion centralisé.

En particulier, les informations envoyées vers un système de gestion centralisé peuvent comprendre des informations sur un état de fonctionnement du dispositif de charge, des informations d'identification d'un utilisateur ou du dispositif de charge, une quantité d'énergie délivrée ou une information sur un état d'activité du dispositif.

### PRESENTATION DES DESSINS

D'autres caractéristiques et avantages de l'invention ressortiront encore de la description qui suit, laquelle doit être lue en regard des dessins annexés, parmi lesquels :
- la figure 1 représente de manière schématique un dispositif de charge et une borne de charge conformes à un mode de réalisation de l'invention,
- la figure 2 représente de manière schématique, en vue de dessus et en coupe partielle selon le plan de coupe A-A, le dispositif de charge de la figure 1,
- la figure 3 représente de manière schématique un circuit de puissance pour l'alimentation du dispositif de charge,
- la figure 4 représente de manière schématique une carte de commande électronique pour la commande du dispositif de charge.

### DESCRIPTION DETAILLEE D'UN MODE DE REALISATION

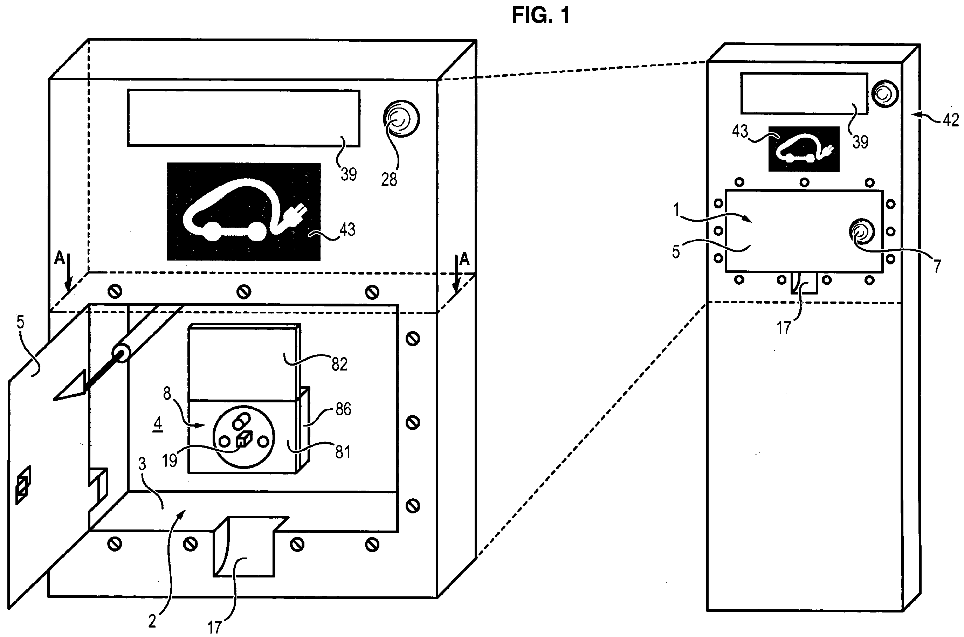

Sur la figure 1, le dispositif de charge 1 est incorporé dans une borne de charge 42 installée en espace public (par exemple sur la voirie) ou en espace privé (par exemple dans un parking privé). Alternativement, le dispositif de charge pourrait être fixé sur un mur ou sur un poteau creux profilé à l'intérieur duquel serait assuré son alimentation en énergie électrique.

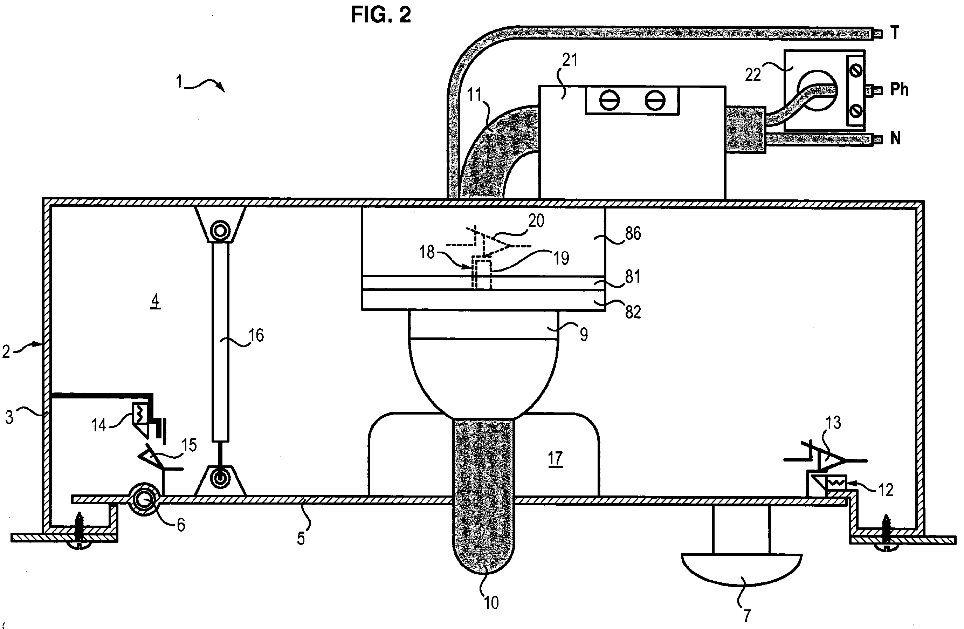

Sur les figures 1 et 2, le dispositif de charge 1 comprend un boîtier 2 comprenant des parois 3 délimitant un espace intérieur 4, et une porte de sécurité 5. La porte de sécurité 5 est mobile en rotation par rapport aux parois 3 autour d'un axe vertical 6 entre une position fermée (illustrée sur la figure 2) dans laquelle la porte de sécurité 5 empêche l'accès à l'espace intérieur 4 et une position ouverte (illustrée sur la figure 1) dans laquelle la porte de sécurité 5 autorise l'accès à l'espace intérieur 4.

La porte de sécurité 5 comprend une poignée 7 permettant à un utilisateur de manoeuvrer la porte de sécurité 5, et notamment d'ouvrir la porte de sécurité 5 pour accéder à l'espace intérieur 4 du boîtier 2.

Le dispositif de charge 1 comprend en outre un socle de prise 8 placé à l'intérieur du boîtier 2 dans l'espace intérieur 4. Les parois 3 permettent d'interdire l'accès aux composants électriques du dispositif, autres que le socle de prise 8, et pouvant présenter un danger pour l'utilisateur.

Le socle de prise 8 comprend une base 81 et un couvercle 82 monté rotatif par rapport à la base 81 autour d'un axe horizontal. La base 81 peut être montée sur un boîtier 86 monté en saillie sur la paroi de fond du boîtier 2. La base 81 est adaptée pour recevoir une fiche 9 connectée à un câble de charge souple 10, notamment un câble de charge relié au véhicule automobile, au dispositif de charge 1 et ainsi raccorder le chargeur associé à la batterie à un réseau de distribution électrique triphasé 230/400 Volts et 50 Hertz pour recharger la batterie. Le socle de prise 8 peut être encastré dans la paroi de fond du boîtier 2.

Le socle de prise 8 est du type domestique 2P+T (deux pôles + terre) 250 Volts, 16 Ampères et répond aux normes NFC 61314, LCIE N° 615134A et CEI 60884-1. Ce socle de prise est compatible avec le socle Schuko (modèle belge et français) 250 Volts, 16 Ampères.

A cet effet, la base 81 est reliée à un câble électrique monophasé 11 permettant d'alimenter la base 81 en énergie électrique à partir du réseau de distribution électrique général. Le câble électrique monophasé 11 est un câble de tension assignée 250 Volts, à deux pôles et présentant une section de 2x2,5 mm².

Le dispositif de charge 1 comprend en outre une première gâche électrique 12 (gâche électrique A) adaptée pour verrouiller la porte de sécurité 5 en position fermée. La première gâche électrique 12 peut être déverrouillée en étant mise sous tension pour autoriser l'ouverture manuelle de la porte de sécurité 5.

Le dispositif de charge 1 comprend en outre un premier capteur électrique de fin de course 13 (capteur A) adapté pour détecter que la porte de sécurité 5 est en position fermée.

Par ailleurs, le dispositif de charge 1 comprend également une deuxième gâche électrique 14 (gâche électrique B) adaptée pour verrouiller la porte de sécurité 5 en position ouverte. La gâche électrique 14 peut être déverrouillée en étant mise sous tension pour autoriser la fermeture de la porte de sécurité 5.

Le dispositif de charge 1 comprend en outre un deuxième capteur électrique de fin de course 15 (capteur B) adapté pour détecter que la porte de sécurité 5 est en position ouverte.

Le dispositif de charge 1 comprend enfin un vérin de traction 16 à ressort à gaz adapté pour solliciter la porte de sécurité 5 vers la position fermée. Le vérin 16 permet un retour automatique de la porte de sécurité 5 en position fermée dès que la porte de sécurité 5 n'est plus maintenue en position ouverte par la deuxième gâche électrique 14. Le vérin de traction 16 est caractérisé par une force de traction X, une vitesse de rentrée Y et une longueur de course amortie Z.

Le boîtier 2 présente une lumière 17 ménagée dans une paroi inférieure du boîtier 2 pour le passage du câble de charge 10 du véhicule vers l'extérieur du boîtier 2 lorsque le câble de charge 10 est connecté au dispositif de charge 1 et que la porte de sécurité 5 est en position fermée. Ainsi, la câble de charge 10 passe sous la porte de sécurité lorsque la porte est fermée.

Le dispositif de charge 1 comprend en outre un capteur de position 18 (capteur C) adapté pour détecter une position de la fiche 9 par rapport au socle 8 lors du branchement du câble de charge 10.

Le capteur de position 18 comprend un pion 19 mobile par rapport au socle de prise 8 et un interrupteur 20. Le pion 19 est agencé pour venir en contact avec la fiche 9 de manière à être déplacé par la fiche 9 lorsque la fiche 9 est insérée dans le socle de prise 8. Le déplacement du pion 19 commande l'ouverture et la fermeture de l'interrupteur 20. Un tel capteur 18 permet de déterminer si la fiche 9 est correctement insérée dans le socle de prise 8.

En variante, le capteur de position 18 peut comprendre un capteur magnétique apte à générer un signal électrique représentatif de la position de la fiche par rapport au socle de prise.

Par ailleurs, le dispositif de charge 1 comprend un contacteur bipolaire 21 (contacteur D) raccordé au conducteur phase et au conducteur neutre du câble 11, et adapté pour être commandé en position ouverte ou fermée afin de déclencher respectivement la mise hors tension ou la mise sous tension du socle de prise 8. Le contacteur bipolaire 21 présentant un courant assigné de 20 Ampères et une tension assignée de 250 Volts AC.

Le dispositif de charge 1 comprend un capteur de courant 22 permettant de détecter l'intensité du courant circulant dans le conducteur de phase du câble 11.

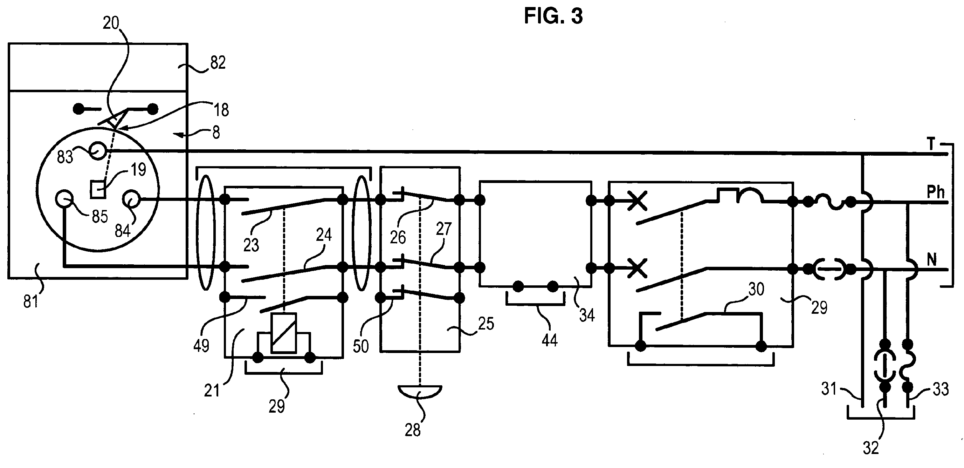

La figure 3 représente de manière schématique le circuit de puissance du dispositif de charge 1, le circuit de puissance reliant le socle de prise 8 au réseau de distribution électrique général.

La base 81 du socle de prise 8 comprend trois contacts électriques 83 à 85 adaptés pour être raccordés respectivement à un conducteur du câble 11 d'alimentation : le conducteur de terre, le conducteur de phase et le conducteur neutre. Le contact électrique 83 est une broche électrique saillante tandis que les contacts électriques 84 et 85 sont des alvéoles conductrices femelles avec accès protégé par des éclips dans certains pays comme la France.

Le contacteur bipolaire 21 permet la mise hors tension ou sous tension du socle de prise 8 par ouverture ou fermeture de deux interrupteurs 23, 24, chaque interrupteur étant agencé entre un contact 84, 85 du socle de prise et un conducteur correspondant du câble 11.

Le circuit de puissance comprend en outre un capteur 49 apte à générer un signal électrique de détection indiquant si le contacteur bipolaire 21 se trouve dans l'état ouvert ou fermé.

Le circuit de puissance comprend en outre un dispositif d'arrêt d'urgence 25 comprenant des interrupteurs 26, 27 et un bouton poussoir 28 adapté pour être actionné manuellement par un utilisateur, par exemple en cas de danger, pour interrompre le fonctionnement du dispositif de charge.

Le circuit de puissance comprend également un capteur 50 apte à générer un signal électrique de détection indiquant si le dispositif d'arrêt d'urgence est déclenché.

Le circuit de puissance comprend également un disjoncteur différentiel 29 de 30 mA et de type A, voire de type B, pour interrompre le fonctionnement du dispositif de charge en cas de surcharge, de court-circuit ou de défaut d'isolement, et un capteur électrique 30 adapté pour détecter l'état du disjoncteur. Le capteur électrique 30 est apte à générer un signal électrique de détection indiquant si le disjoncteur se trouve dans l'état ouvert ou fermé.

Le circuit de puissance comprend également des conducteurs d'alimentation 31 à 33 de la carte de commande électronique 35 du dispositif de charge.

Enfin, le circuit de puissance comprend un compteur d'énergie 34 adapté pour mesurer la quantité d'énergie électrique délivrée par le réseau de distribution général au véhicule. Le compteur d'énergie 34 comprend une sortie 44 délivrant des impulsions de comptage d'énergie (une impulsion correspondant à une valeur prédéterminée d'énergie en Wh/impulsion). Ces impulsions sont traitées par la carte de commande électronique 35 afin de déterminer l'énergie délivrée au véhicule.

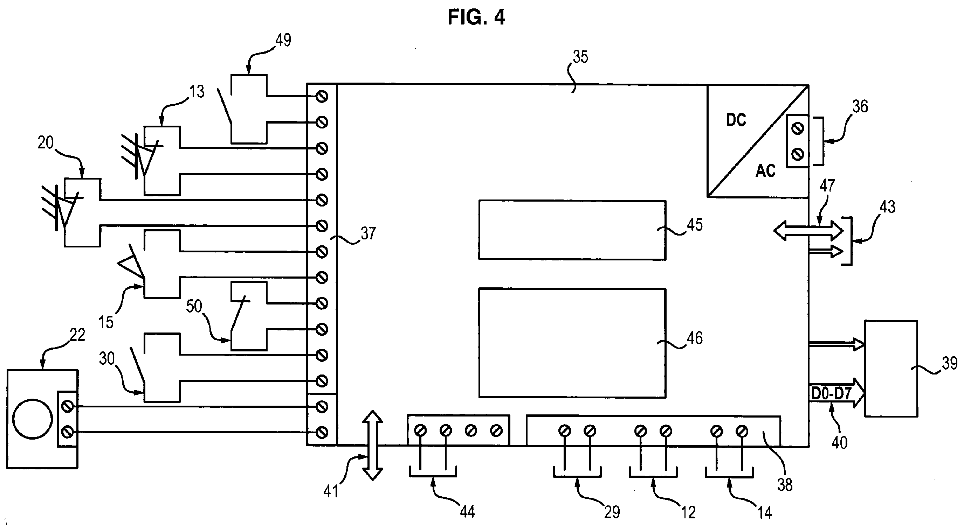

Enfin, le dispositif de charge 1 comprend une carte de commande électronique 35 illustrée sur la figure 4, un lecteur de badge RFID (RadioFrequency IDentification) 43 et un dispositif d'affichage alphanumérique 39.

La carte de commande électronique 35 comprend un processeur 45, une zone mémoire 46, ainsi que des périphériques (non-représentés) assurant des fonctions en relations avec les entrées et les sorties de la carte. La carte de commande électronique 35 comprend en outre une entrée d'alimentation 36, une pluralité d'entrées de signaux de détection 37 (incluant des entrées Tout Ou Rien (TOR) et une entrée analogique) et une pluralité de sorties de signaux de commande 38.

Les entrées 37 de la carte électronique sont reliées aux différents capteurs de manière à recevoir des signaux de détection en provenance de ces capteurs, ainsi qu'à la sortie 44 du compteur d'énergie 34. En particulier, la carte de commande électronique 35 reçoit des signaux de détection en provenance du premier capteur de fin de course 13, du deuxième capteur de fin de course 15, du troisième capteur de fin de course 20, du capteur 50 du dispositif d'arrêt d'urgence 25, du capteur 49 du contacteur bipolaire 21, du capteur électrique 30 du disjoncteur (ouverture/fermeture) et du capteur de courant de phase 22. Le dispositif de charge 1 comprend également un bus 47 de commande, d'alimentation et de données reliant la carte au lecteur de badge 43.

Les sorties 38 de la carte électronique sont reliées à la première gâche électrique 12, à la deuxième gâche électrique 14 et à la bobine 29 du contacteur bipolaire 21. La carte de commande électronique 35 émet des signaux de commande à destination des gâches électriques 12 et 14 afin de commander leur mise sous tension, et à destination de la bobine 29 du contacteur bipolaire 21 afin de commander son ouverture et sa fermeture.

Par ailleurs, la carte de commande électronique 35 est reliée au dispositif d'affichage 39 via un bus de commande, d'alimentation et de données 40, permettant à la carte de commande électronique 35 de commander le dispositif d'affichage 39 pour afficher des messages à l'attention d'un utilisateur du dispositif.

Enfin, la carte de commande électronique 35 est reliée à un bus de communication externe bidirectionnel 41 permettant d'échanger des données avec d'autres cartes électroniques de commande ou d'envoyer des informations vers un système de gestion centralisé, telles que par exemple des informations sur un état de fonctionnement du dispositif de charge, des information d'identification d'un utilisateur ou du dispositif de charge, une quantité d'énergie délivrée ou une information sur un état d'activité du dispositif (libre/occupé).

Les dispositifs de charge sont reliés entre eux en réseau par le bus 41. Par ailleurs, les dispositifs de charge incluent un dispositif de charge maître et des dispositifs de charge esclave. Le dispositif de charge maître interroge chacun des dispositifs de charge esclaves et collecte les données en provenance des dispositifs de charge esclave. Le dispositif de charge maître comprend un Modem GPRS permettant de transmettre les données collectées par voie radiofréquence au système de gestion centralisé.

Le processeur 45 de la carte de commande électronique 35 est adapté pour exécuter un programme de commande du dispositif de charge, !e programme de commande étant enregistré dans la zone mémoire 46.

En particulier, la carte électronique 35 est programmée pour commander le dispositif d'affichage 39, la mise sous tension des gâches électriques 12, 14 et l'ouverture et la fermeture du contacteur bipolaire 21, en fonction des signaux qu'elle reçoit du lecteur de badge 43 et des différents capteurs 13, 15, 20, 22, 30, 49 et 50.

Les différentes étapes d'un procédé de commande du dispositif de charge sont les suivantes.

Au début du procédé, la porte de sécurité du dispositif est en position fermée.

La carte de commande électronique commande le dispositif d'affichage pour qu'il affiche un message invitant l'utilisateur à présenter son badge au lecteur de badge (première étape).

En parallèle, la carte de commande électronique détermine si un badge est détecté et validé par le lecteur de badge (deuxième étape).

Dès qu'un badge est détecté et validé par le lecteur de badge, la carte de commande électronique transmet un message au système de gestion centralisé. Le message inclut des informations identifiant le dispositif de charge (tel qu'un numéro d'identification par exemple), et des informations indiquant l'état d'activité du dispositif (état occupé) (troisième étape).

Puis la carte de commande électronique commande le dispositif d'affichage pour qu'il affiche un message invitant l'utilisateur à ouvrir la porte de sécurité (quatrième étape).

Puis, la carte de commande électronique commande la mise sous tension de la gâche électrique A pour permettre l'ouverture de la porte (cinquième étape) pendant une durée temporisation prédéterminée (tempo. A).

La carte de commande électronique détermine si la durée de temporisation (tempo. A) est écoulée (sixième étape).

Si le capteur A est fermé à l'issue de la durée de temporisation, la carte de commande électronique transmet un message au système de gestion centralisé indiquant que le dispositif de charge est libre et retourne à la première étape.

Tant que la durée de temporisation n'est pas écoulée, la carte de commande électronique détermine si le capteur B est fermé (septième étape), c'est-à-dire si la porte de sécurité est en position ouverte.

Dès que le capteur B est fermé (c'est-à-dire que la porte est en position ouverte), la carte de commande électronique commande le dispositif d'affichage pour qu'il affiche un message invitant l'utilisateur à raccorder le véhicule au dispositif de charge (huitième étape). De plus, la carte de commande électronique commande le déclenchement d'une temporisation pour maintenir la porte de sécurité ouverte et permettre à l'utilisateur d'effectuer le raccordement pendant une durée de temporisation prédéterminée (tempo. B).

La carte de commande électronique détermine si la durée de temporisation (tempo. B) est écoulée (neuvième étape).

Tant que la durée de temporisation n'est pas écoulée, la carte de commande électronique détermine si le capteur C est fermé (dixième étape), c'est-à-dire si la fiche est correctement branchée dans le socle de prise.

Lorsque la durée de temporisation s'est écoulée sans que la fiche n'ait été branchée dans le socle, la carte de commande électronique commande la mise sous tension de la gâche B (onzième étape), ce qui entraine la fermeture automatique de la porte de sécurité. De plus, la carte de commande électronique commande le dispositif d'affichage pour qu'il affiche un message avertissant l'utilisateur de la fermeture automatique de la porte. Puis, la carte de commande électronique retourne à la première étape.

Lorsque l'utilisateur a correctement branché la fiche dans le socle, la carte de commande électronique commande le dispositif d'affichage pour qu'il affiche un message avertissant l'utilisateur de la fermeture automatique de la porte (douzième étape). En outre, la carte de commande électronique commande la mise sous tension de la gâche B afin de permettre la fermeture de la porte de sécurité et la fermeture du contacteur D entraînant la mise sous tension du câble de charge du véhicule.

La carte de commande électronique commande le dispositif d'affichage pour qu'il affiche un message demandant à l'utilisateur de raccorder le câble de charge au véhicule (treizième étape). De plus, la carte de commande électronique déclenche une temporisation qui laisse le temps à l'utilisateur de raccorder le câble au véhicule et au chargeur d'établir un courant de charge nominal.

La carte de commande électronique détermine si la durée de temporisation (tempo. C) est écoulée (quatorzième étape).

Tant que la durée de temporisation (tempo. C) n'est pas écoulée, la carte de commande électronique détermine si le courant de charge est supérieur à une valeur seuil minimale prédéterminée (quinzième étape).

Si le courant de charge n'est pas supérieur à la valeur seuil, c'est-à-dire si le courant de charge est insuffisant, par exemple parce que l'utilisateur n'a pas raccordé le câble de charge au véhicule, la carte de commande électronique maintient le test tant que la durée de temporisation n'est pas écoulée.

Une fois la durée de temporisation écoulée, la carte de commande électronique commande le dispositif d'affichage pour qu'il affiche un message invitant l'utilisateur à présenter son badge au lecteur de badge pour récupérer le câble (seizième étape). De plus, la carte de commande électronique commande l'ouverture du contacteur D, c'est-à-dire que la carte de commande électronique met fin à l'alimentation du socle de prise et du câble électrique monophasé.

La carte de commande électronique détermine si un badge est détecté par le lecteur de badge (dix-septième étape).

Dès qu'un badge est détecté par le lecteur de badge, la carte de commande électronique détermine s'il s'agit du badge de l'utilisateur (dix-huitième étape).

S'il s'agit du badge de l'utilisateur, la carte de commande électronique commande le dispositif d'affichage pour qu'il affiche un message invitant l'utilisateur à ouvrir la porte de sécurité (dix-neuvième étape).

Puis, la carte de commande électronique commande la mise sous tension de la gâche électrique A pour permettre l'ouverture de la porte (vingtième étape) pendant une durée de temporisation prédéterminée (tempo. A).

La carte de commande électronique détermine si la durée de temporisation (tempo. A) est écoulée (vingt-et-unième étape).

Si le capteur A est fermé à l'issue de la durée de temporisation, la carte de commande électronique commande le dispositif d'affichage pour que le dispositif d'affichage affiche un message invitant l'utilisateur à présenter son badge pour récupérer le câble et retourne à la dix-septième étape.

La carte de commande électronique détermine si le capteur B est fermé (vingt-deuxième étape), c'est-à-dire si la porte de sécurité est en position ouverte.

Dès que le capteur B est fermé (c'est-à-dire que la porte est en position ouverte), la carte de commande électronique commande le dispositif d'affichage pour qu'il affiche un message invitant l'utilisateur à débrancher le câble de charge (vingt-troisième étape). De plus, la carte de commande électronique commande le déclenchement d'une temporisation pour maintenir la porte de sécurité ouverte et permettre à l'utilisateur d'effectuer le débranchement pendant une durée temporisation prédéterminée (tempo. B).

La carte de commande électronique détermine si la durée de temporisation (tempo. B) est écoulée (vingt-quatrième étape).

Tant que la durée de temporisation n'est pas écoulée, la carte de commande électronique détermine si le capteur C est ouvert (vingt-cinquième étape), c'est-à-dire si la fiche est débranchée du socle de prise.

Lorsque la durée de temporisation s'est écoulée sans que la fiche n'ait été débranchée du socle, la carte de commande électronique commande la mise sous tension de la gâche B (vingt-sixième étape), ce qui entraine la fermeture automatique de la porte de sécurité. De plus, la carte de commande électronique commande le dispositif d'affichage pour qu'il affiche un message avertissant l'utilisateur de la fermeture automatique de la porte. Puis, la carte de commande électronique commande le dispositif d'affichage pour que le dispositif d'affichage affiche un message invitant l'utilisateur à présenter son badge pour récupérer le câble et retourne à la dix-septième étape.

Dès que l'utilisateur a débranché la fiche du socle, la carte de commande électronique commande le dispositif d'affichage pour qu'il affiche un message avertissant l'utilisateur de la fermeture automatique de la porte (vingt-septième étape). Puis, la carte de commande électronique transmet un message au système de gestion centralisé. Le message inclut des informations identifiant le dispositif de charge, et des informations indiquant l'état d'activité du dispositif (état libre) et la carte de commande électronique retourne à la première étape.

Si, lors de la dix-huitième étape, la carte de commande électronique détermine qu'il ne s'agit pas du badge de l'utilisateur, la carte de commande électronique commande le dispositif d'affichage pour qu'il affiche un message indiquant que le dispositif est hors-service. De plus, la carte de commande électronique transmet un message au système de gestion centralisé indiquant que le dispositif de charge est hors-service et que le câble de charge doit être récupéré. Le câble ne pourra alors être débranché que sur présentation d'un badge de l'exploitant.

Si, à la quinzième étape, le courant de charge est supérieur à la valeur seuil, la carte de commande électronique commande le dispositif d'affichage pour qu'il affiche un message indiquant à l'utilisateur que le véhicule est en cours de charge (vingt-huitième étape).

Puis, la carte de commande électronique détermine si le courant de charge est toujours supérieur à une valeur seuil minimale prédéterminée (vingt-neuvième étape).

Tant que le courant de charge est supérieur à la valeur seuil minimale, la carte de commande électronique détermine si le capteur C est ouvert, c'est-à-dire si la fiche n'est pas correctement branchée dans le socle de prise (trentième étape).

Dès que la fiche n'est pas correctement branchée dans le socle de prise, la carte de commande électronique commande le dispositif d'affichage pour qu'il affiche un message signalant que la charge est interrompue et invitant l'utilisateur à présenter son badge au lecteur de badge pour récupérer le câble (trente-et-unième étape). De plus, la carte de commande électronique commande l'ouverture du contacteur D, c'est-à-dire que la carte de commande électronique met fin à l'alimentation du socle de prise.

Tant que le capteur C est fermé, la carte de commande électronique détermine si le courant de charge est inférieur à la valeur seuil, c'est-à-dire que la charge est terminée. Dès que le courant de charge est inférieur à la valeur seuil, la carte de commande électronique commande le dispositif d'affichage pour qu'il affiche un message signalant que la charge est terminée et invitant l'utilisateur à présenter son badge au lecteur de badge pour récupérer le câble (trente-deuxième étape). De plus, la carte de commande électronique commande l'ouverture du contacteur D, c'est-à-dire que la carte de commande électronique met fin à l'alimentation du socle de prise.

A l'issue de la trente-et-unième ou de la trente-deuxième étape, la carte de commande électronique exécute la trente-cinquième étape et les étapes de récupération du câble (de la dix-septième à la vingt-septième étape).

Tant que la fiche est correctement branchée dans le socle de prise et tant que le courant de charge est supérieur à la valeur seuil minimale, la carte de commande électronique détermine si un badge est détecté et validé par le lecteur de badge (trente-troisième étape).

Dès qu'un badge est détecté et validé par le lecteur de badge, la carte de commande électronique commande le dispositif d'affichage pour qu'il affiche un message signalant que la charge est arrêtée et invitant l'utilisateur à présenter son badge pour récupérer le câble (trente-quatrième étape). De plus, la carte de commande électronique commande l'ouverture du contacteur D, c'est-à-dire que la carte de commande électronique met fin à l'alimentation du socle de prise.

Puis, la carte de commande électronique transmet un message au système de gestion centralisé (trente-cinquième étape). Le message inclut des informations identifiant le dispositif de charge, des informations identifiant l'utilisateur, la quantité d'énergie délivrée et des informations indiquant l'état d'activité du dispositif (état libre).

La carte de commande électronique exécute les étapes de récupération du câble (de la dix-septième à la vingt-septième étape).

Par ailleurs, à tout moment, pendant l'exécution du procédé, la carte de commande électronique détermine si le disjoncteur et/ou le dispositif d'arrêt d'urgence est déclenché.

Si le disjoncteur ou le dispositif d'arrêt d'urgence est déclenché, la carte de commande électronique commande le dispositif d'affichage pour qu'il affiche un message signalant que le dispositif de charge est hors service. Dans ce cas, il est mis fin au procédé.

La carte de commande électronique transmet au système de gestion centralisé des informations sur la charge éventuellement en cours et un message d'anomalie, le message incluant des informations identifiant le dispositif de charge et signalant que le dispositif est défectueux.

Le dispositif de charge ne pourra être remis en marche que par l'intervention d'un technicien habilité à réenclencher le disjoncteur ou le dispositif d'arrêt d'urgence.

De plus, à tout moment pendant l'exécution du procédé, la carte de commande électronique détermine si le contacteur bipolaire est fermé en dehors de la phase de charge. Si le contacteur est fermé, la carte de commande électronique commande le dispositif d'affichage pour qu'il affiche un message signalant que le dispositif de charge est hors-service. Dans ce cas, il est mis fin au procédé, la carte de commande électronique transmet au système de gestion centralisé un message d'anomalie, le message incluant des informations identifiant le dispositif de charge et signalant que le dispositif est défectueux. En effet, dans ce cas, le socle de prise est sous tension alors qu'aucun câble de charge n'est raccordé au dispositif de charge. Le message d'anomalie permettra l'intervention d'un technicien.

## Revendications

1. Dispositif de charge (1) pour la livraison d'énergie électrique nécessaire à la recharge d'une batterie embarquée dans un véhicule électrique ou un véhicule électrique hybride rechargeable comprenant :
- un socle de prise (8) adapté pour recevoir une fiche (9) d'un câble de charge (10) pour raccorder un chargeur associé à la batterie à un réseau de distribution électrique,
- un boîtier (2) dans lequel est placé le socle de prise (8), le boîtier (2) comprenant une porte de sécurité (5) mobile entre une position ouverte autorisant un accès au socle de prise (8) et une position fermée empêchant l'accès au socle de prise (8), et
- un moyen de commande (35) programmé pour :
déterminer si une condition de branchement de la fiche (9) dans le socle (8) est satisfaite, et dans le cas où la condition est satisfaite, déclencher une mise sous tension du socle de prise (8) et une fermeture automatique de la porte de sécurité (5), et pour
déterminer si un courant de charge supérieur à une valeur seuil prédéterminée est délivré à travers le socle de prise (8) et, tant que le courant de charge est supérieur à la valeur seuil prédéterminée, déterminer si la condition de branchement de la fiche (9) dans le socle (8) est satisfaite, et dans le cas où la condition n'est pas satisfaite, interrompre la mise sous tension du socle de prise (8),
le moyen de commande (35) étant programmé pour déclencher une temporisation (C) d'une durée prédéterminée et pour interrompre la mise sous tension du socle de prise (8) si, une fois la durée prédéterminée écoulée, le courant de charge est inférieur à la valeur seuil prédéterminée.

2. Dispositif selon la revendication 1, dans lequel le moyen de commande (35) est programmé pour déterminer si un courant de charge supérieur à une valeur seuil prédéterminée est délivré à travers le socle de prise (8) et pour interrompre la mise sous tension du socle de prise (8) si le courant de charge est inférieur à la valeur seuil prédéterminée.

3. Dispositif selon l'une des revendications 1 à 2, comprenant en outre un capteur de position (18) adapté pour détecter une position de la fiche (9) par rapport au socle (8), et dans lequel le moyen de commande (35) est adapté pour déterminer si la condition de branchement de la fiche (9) dans le socle (8) est satisfaite en fonction de la position détectée par le capteur (18).

4. Dispositif selon la revendication 3, dans lequel le capteur de position (18) comprend un pion (19) mobile par rapport au socle de prise (8) et agencé pour venir en contact avec la fiche (9) de manière à être déplacé par la fiche (9) lorsque la fiche (9) est insérée dans le socle de prise (8).

5. Dispositif selon l'une des revendications 1 à 4, comprenant un moyen de lecture adapté pour lire des données d'un badge et transmettre les données lues vers le moyen de commande (35), le moyen de commande (35) étant apte à déclencher l'ouverture et/ou la fermeture de la porte de sécurité (5) en fonction des données lues.

6. Dispositif selon la revendication 5, dans lequel le moyen de commande (35) est apte à comparer les données lues avec des données contenues dans une base de données locale située dans le moyen de commande ou une base de données distante d'un système de gestion centralisé.

7. Dispositif selon l'une des revendications 5 ou67, dans lequel le moyen de commande (35) est apte à déverrouiller la porte de sécurité (5) pour permettre l'ouverture de la porte en fonction des données lues.

8. Dispositif selon l'une des revendications 1 à 7, comprenant en outre un moyen (14) de maintien de la porte en position ouverte, le moyen de commande (35) étant apte à désactiver le moyen de maintien afin d'autoriser la fermeture de la porte.

9. Dispositif selon l'une des revendications 1 à 8, comprenant en outre un moyen de rappel (16) adapté pour solliciter la porte de sécurité (5) vers la position fermée de manière à provoquer une fermeture automatique de la porte de sécurité (5).

10. Dispositif selon l'une des revendications qui précèdent, comprenant en outre un dispositif d'affichage (39) adapté pour être commandé par le moyen de commande (35), le moyen de commande (35) commandant le dispositif d'affichage (39) pour que le dispositif d'affichage (39) affiche des messages à l'attention d'un utilisateur du dispositif afin de guider l'utilisateur dans des opérations de raccordement du câble de charge.

11. Dispositif selon l'une des revendications qui précèdent, comprenant un compteur d'énergie (34) adapté pour délivrer des impulsions de comptage d'énergie dépendant d'une quantité d'énergie électrique délivrée par le réseau de distribution électrique à la batterie, et dans lequel le moyen de commande (35) est programmé pour traiter les impulsions délivrées par le compteur d'énergie (34) et en déduire la quantité d'énergie électrique délivrée par le réseau de distribution électrique à la batterie.

12. Système pour la livraison d'énergie électrique nécessaire à la recharge de batteries embarquées dans des véhicules électriques ou des véhicules électriques hybrides rechargeables, comprenant une pluralité de dispositifs de charge selon l'une des revendications 1 à 11, les dispositifs de charge étant reliés entre eux par un bus de communication pour échanger des données entre les dispositifs de charge et/ou envoyer des informations vers un système de gestion centralisé.

13. Système selon la revendication 12, dans lequel les informations envoyées vers un système de gestion centralisé comprennent des informations sur un état de fonctionnement du dispositif de charge, des informations d'identification d'un utilisateur ou du dispositif de charge, une quantité d'énergie délivrée ou une information sur un état d'activité du dispositif.

## Patentansprüche

1. Ladevorrichtung (1) für die Lieferung elektrischer Energie, die zum Aufladen einer in ein Elektrofahrzeug oder in ein aufladbares elektrisches Hybridfahrzeug eingebauten Batterie notwendig ist, umfassend:
- einen Steckdosensockel (8), der ausgebildet ist, um einen Stecker (9) eines Ladekabels (10) aufzunehmen, um ein der Batterie zugeordnetes Ladegerät an ein Stromverteilungsnetz anzuschließen,
- ein Gehäuse (2), in welches der Steckdosensockel (8) platziert ist, wobei das Gehäuse (2) eine zwischen einer geöffneten Position, welche einen Zugriff auf den Steckdosensockel (8) erlaubt, und einer geschlossenen Position, welche den Zugriff auf den Steckdosensockel (8) verhindert, bewegliche Sicherheitstür (5) umfasst, und
- ein Steuermittel (35), das programmiert ist, um:
zu bestimmen, ob eine Anschlussbedingung des Stecker (9) im Sockel (8) erfüllt ist, und, wenn die Bedingung erfüllt ist, ein Unterspannungsetzen des Steckdosensockels (8) und ein automatisches Schließen der Sicherheitstür (5) auszulösen, und um
zu bestimmen, ob ein Ladestrom über einem vorbestimmen Grenzwert durch den Steckdosensockel (8) bereitgestellt wird und, sobald der Ladestrom über dem vorbestimmten Grenzwert liegt, zu bestimmen, ob die Anschlussbedingung des Steckers (9) im Sockel (8) erfüllt ist, und, wenn die Bedingung nicht erfüllt ist, das Unterspannungsetzen des Steckdosensockels (8) zu unterbrechen,
wobei das Steuermittel (35) programmiert ist, um eine Zeitschaltung (C) einer vorbestimmten Dauer auszulösen und um das Unterspannungsetzen des Steckdosensockels (8) zu unterbrechen, wenn nach Ablauf der vorbestimmten Dauer der Ladestrom unter dem vorbestimmten Grenzwert liegt.

2. Vorrichtung nach Anspruch 1, wobei das Steuermittel (35) programmiert ist, um zu bestimmen, ob ein Ladestrom über einem vorbestimmten Grenzwert durch den Steckdosensockel (8) bereitgestellt wird und um das Unterspannungsetzen des Steckdosensockels (8) zu unterbrechen, wenn der Ladestrom unter dem vorbestimmten Grenzwert liegt.

3. Vorrichtung nach einem der Ansprüche 1 bis 2, umfassend ferner einen Positionssensor (18), der ausgebildet ist, um eine Position des Steckers (9) in Bezug zum Sockel (8) festzustellen, und wobei das Steuermittel (35) ausgebildet ist, um zu bestimmen, ob die Anschlussbedingung des Steckers (9) im Sockel (8) in Abhängigkeit von der von dem Sensor (18) festgestellten Position erfüllt ist.

4. Vorrichtung nach Anspruch 3, wobei der Positionssensor (18) einen Stift (19) umfasst, der in Bezug zum Steckdosensockel (8) beweglich ist und ausgebildet, um mit dem Stecker (9) derart in Kontakt zu kommen, dass er von dem Stecker (9) verlagert wird, wenn der Stecker (9) in den Steckdosensockel (8) eingesetzt ist.

5. Vorrichtung nach einem der Ansprüche 1 bis 4, umfassend ein Lesemittel, das ausgebildet ist, um Daten von einem Button zu lesen und die gelesenen Daten an das Steuermittel (35) zu übertragen, wobei das Steuermittel (35) ausgebildet ist, um das Öffnen und/oder Schließen der Sicherheitstür (5) in Abhängigkeit von den gelesenen Daten auszulösen.

6. Vorrichtung nach Anspruch 5, wobei das Steuermittel (35) imstande ist, die gelesenen Daten mit Daten zu vergleichen, die in einer lokalen Datenbank enthalten sind, die sich im Steuermittel oder in einer entfernten Datenbank eines zentralisierten Verwaltungssystems befindet.

7. Vorrichtung nach einem der Ansprüche 5 oder 67, wobei das Steuermittel (35) imstande ist, die Sicherheitstür (5) zu entriegeln, um das Öffnen der Tür in Abhängigkeit von den gelesenen Daten zu erlauben.

8. Vorrichtung nach einem der Ansprüche 1 bis 7, umfassend ferner ein Haltemittel (14) der Tür in geöffneter Position, wobei das Steuermittel (35) imstande ist, das Haltemittel zu deaktivieren, um das Schließen der Tür zu erlauben.

9. Vorrichtung nach einem der Ansprüche 1 bis 8, umfassend ferner ein Rückstellmittel (16), das ausgebildet ist, um die Sicherheitstür (5) in die geschlossene Position derart zu beanspruchen, dass ein automatisches Schließen der Sicherheitstür (5) veranlasst wird.

10. Vorrichtung nach einem der vorangehenden Ansprüche, umfassend ferner eine Anzeigevorrichtung (39), die ausgebildet ist, um von dem Steuermittel (35) gesteuert zu sein, wobei das Steuermittel (35) die Anzeigevorrichtung (39) steuert, damit die Anzeigevorrichtung (39) Nachrichten für einen Benutzer der Vorrichtung anzeigt, um den Benutzer bei den Anschlussvorgängen des Ladekabels zu führen.

11. Vorrichtung nach einem der vorangehenden Ansprüche, umfassend einen Energiezähler (34), der ausgebildet ist, um Energiezählimpulse in Abhängigkeit von einer von dem Stromverteilungsnetz an die Batterie gelieferten Menge elektrischer Energie bereitzustellen, und wobei das Steuermittel (35) programmiert ist, um die von dem Energiezähler (34) bereitgestellten Impulse zu verarbeiten und daraus die von dem Stromverteilungsnetz an die Batterie gelieferte Menge elektrischer Energie abzuleiten.

12. System für die Lieferung der für das Aufladen von in Elektrofahrzeuge oder aufladbare elektrische Hybridfahrzeuge eingebauten Batterien notwendigen Energie, umfassend eine Vielzahl von Ladevorrichtungen nach einem der Ansprüche 1 bis 11, wobei die Ladevorrichtungen miteinander durch einen Kommunikationsbus verbunden sind, um Daten zwischen den Ladevorrichtungen auszutauschen und/oder um Informationen an ein zentralisiertes Verwaltungssystem zu schicken.

13. System nach Anspruch 12, wobei die an ein zentralisiertes Verwaltungssystem geschickten Informationen Informationen über einen Funktionszustand der Ladevorrichtung, Identifikationsinformationen eines Benutzers oder der Ladevorrichtung, eine bereitgestellte Energiemenge oder eine Information über einen Aktivitätszustand der Vorrichtung umfassen.

## Claims

1. A charging device (1) for supplying electric energy required for recharging a battery on board an electric vehicle or a rechargeable hybrid electric vehicle comprising:
- an electric current socket (8) adapted for receiving a plug (9) of a charging cable (10) for connecting a charger associated with the battery to an electric distribution network,
- a casing (2) in which is placed the electric current socket (8), the casing (2) comprising a safety gate (5) movable between an open position allowing access to the electric current socket (8) and a closed position preventing access to the electric current socket (8), and
- a control means (35) programmed for:
determining whether a connection condition of the plug (9) is met, and in the case when the condition is met, triggering application of voltage on the electric current socket (8) and automatic closing of the safety gate (5), and for
determining whether a charging current greater than a predetermined threshold is delivered through the electric current socket (8) and, as long as the charging current is greater than the predetermined threshold value, determining whether the connection condition of the plug (9) in the socket (8) is met, and in the case when the condition is not met, interrupting application of voltage on the electric current socket (8),
the control means (35) being programmed for triggering a timeout (C) of a predetermined duration and for interrupting application of voltage on the electric current socket (8) if, once the predetermined duration has elapsed, the charging current is less than the predetermined threshold value.

2. The device according to claim 1, where in the control means (35) is programmed so as to determine whether a charging current greater than the predetermined threshold value is delivered through the electric current socket (8) and to interrupt the application of voltage on the electric current socket (8) if the charging current is less than the predetermined threshold value.

3. The device according to one of claims 1 to 2, further comprising a position sensor (18) adapted for detecting a position of the plug (9) relatively to the socket (8), and wherein the control means (35) is adapted for determining whether the connection condition of the plug (9) in the socket (8) is met depending on the position detected by the sensor (18).

4. The device according to claim 3, wherein the position sensor (18) comprises a pin (19) which is movable with respect to the electric current socket (8) and arranged so as to come into contact with the plug (9) so as to be displaced by the plug (9) when the plug (9) is inserted into the electric current socket (8).

5. The device according to one of claims 1 to 4, comprising a suitable reading means for reading data of a badge and transmitting the data read to the control means (35), the control means (35) being able to trigger the opening and/or closing of the safety gate (5) depending on the data read.

6. The device according to claim 5, wherein the control means (35) is able to compare the read data with data contained in a local database located in the control means or a remote database of a centralized management system.

7. The device according to one of claims 5 or 67, wherein the control means (35) is able to unlock the safety gate (5) in order to allow opening of the gate depending on the data read.

8. The device according to one of claims 1 to 7, further comprising a means (14) for maintaining the gate in the open position, the control means (35) being able to deactivate the maintaining means in order to allow closing of the gate.

9. The device according to one of claims 1 to 8, further comprising a suitable return means (16) for urging the safety gate (5) towards the closed position so as to cause automatic closing of the safety gate (5).

10. The device according to one of the preceding claims, further comprising a display device (39) adapted for being controlled by the control means (35), the control means (35) controlling the display device (39) so that the display device (39) displays messages intended for a user of the device in order to guide the user in operations for connecting the charging cable.

11. The device according to one of the preceding claims, comprising an energy counter (34) adapted for delivering energy counting pulses depending on an amount of electric energy delivered by the electric distribution network to the battery, and wherein the control means (35) is programmed for processing the pulses delivered by the energy counter (34) and for inferring therefrom the amount of electric energy delivered by the electric distribution network to the battery.

12. A system for delivering electric energy required for recharging batteries on board electric vehicles or rechargeable hybrid electric vehicles, comprising a plurality of charging devices according to one of claims 1 to 11, the charging devices being connected together through a communications bus for exchanging data between the charging devices and/or sending information to a centralized management system.

13. The system according to claim 12, wherein the pieces of information sent to a centralized management system comprise pieces of information on an operating condition of the charging device, pieces of information for identifying a user or the charging device, a delivered amount of energy or a piece of information on the activity condition of the device.
